# EUROPÄISCHE PATENTANMELDUNG

(11) **EP 0 673 743 A1**
(43) Veröffentlichungstag der Anmeldung: **27.09.1995**
(21) Anmeldenummer: 95710007.6
(22) Anmeldetag: 16.02.1995
(51) Int. Cl.: B29C 45/16, A47K 13/02

(54) **Verfahren zum Herstellen dickwandiger Kunststoff-Artikel**

(30) Priorität: 12.03.1994 DE 4408426
(71) Anmelder: Krauss-Maffei Aktiengesellschaft, D-80997 München (DE)
(72) Erfinder: Lichtinger, Peter, D-82256 Fürstenfeldbruck (DE); Theiss, Edmund, D-85356 Freising (DE)

(57) **Zusammenfassung**

Um dickwandige Kunststoffartikel, wie insbesondere WC-Sitze und -Deckel, in hochwertiger Qualität kostengünstig herstellen zu können, wird ein Verfahren vorgeschlagen, bei dem unter Verwendung des Mehrkomponenten-Spritzgießens ein gespritzter Kern 1 mit einer angespritzten Unterfläche 2 und einer aufgespritzten Oberfläche 3 versehen wird, wobei alle Verfahrensschritte in reproduzierbarer Formgenauigkeit durchgeführt werden. Der Kern wird dabei vorteilhaft mit Treibgas gespritzt.

## Beschreibung

Die Erfindung bezieht sich auf ein Verfahren zum Herstellen dickwandiger Kunststoffartikel gemäß dem Oberbegriff des Patentanspruchs.

Für die Herstellung derartiger Artikel, insbesondere hochwertiger WC-Sitze und Deckel mit hoher Stabilität und Kratzfestigkeit, - im Gegensatz zu entsprechenden billigen, dünnwandigen Artikeln -, werden unterschiedliche, bekannte Verfahren angewendet. Solche dickwandige Artikel haben normalerweise einen hohen Materialbedarf in hochwertiger Qualität und bedürfen beim Spritzgießen sehr langer Zykluszeiten. Sie sind daher sehr teuer. Dabei spielt auch ein gewisses Produktionsrisiko durch Einfallstellen an der Oberfläche eine Rolle, die durch Nachdrücken nur zum Teil vermieden werden können.

Beim Gasinnendruckverfahren, bei dem ein hohler Kernbereich mit einer Außenhaut erzeugt wird, kommt es infolge ungleicher Gasblasenverteilung zu partiellen Einfallstellen und unterschiedlichen Wanddicken.

Werden dickwandige Kunststoffteile im Sandwichverfahren hergestellt, wobei Kern und Außenhaut aus unterschiedlichen Materialien sind, besteht die Gefahr der partiellen Vermischung des Kernmaterials mit dem Außenhautmaterial und ebenfalls unterschiedlicher Wanddicken.

Während beim Blasverfahren eine unbefriedigende Oberflächenqualität in kauf zu nehmen ist, muß bei einer Herstellung durch Zusammenschweißen von zwei Halbschalen der Schweißgrat aufwendig entfernt und der Artikel umlaufend nachpoliert werden.

Nach der Offenlegungsschrift DE 32 29 172 Al ist ein WC-Toilettensitz bekannt, bei dem die Brille aus einem elastischen, geschäumten Innenkern besteht, der an der Oberseite und den Seitenflächen von einer ungeschäumten Schicht umschlossen ist. Um bei formstabilem Aufbau der Brille einen optimalen Sitzkomfort zu erreichen, sieht die Erfindung vor, daß die Schicht von einer elastischen Kunststoffolie gebildet ist und daß die Unterseite der Brille mittels einer formstabilen Kunststoffplatte abgeschlossen ist, die entlang ihren Rändern mit den Rändern der Kunststoffolie abschließt. Die Herstellung eines derartigen Artikels ist arbeitsaufwendig, der Artikel selbst weder formstabil noch kratzfest.

Der Erfindung liegt daher die Aufgabe zugrunde, ein Verfahren anzugeben, mit dem ein dickwandiger Kunststoffartikel, wie insbesondere ein WC-Sitz und -Deckel, in hochwertiger Qualität und variabler Designgestaltung kostengünstig hergestellt werden kann.

Diese Aufgabe wird gemäß den Merkmalen des Patentanspruchs 1 gelöst.

Das Mehrkomponenten-Spritzgießen wird in bekannter Weise für die Herstellung dünnwandiger Artikel ähnlich wie beim 3-Farben-Spritzgießen von Streuscheiben für Kfz-Rückleuchten verwendet. Obwohl dieses Verfahren schon seit langem bekannt ist, hat man es bisher nicht zur Herstellung von dickwandigen Kunststoffteilen wie WC-Sitze und -Deckel eingesetzt. Durch die Erfindung werden eine Reihe zum Teil bisher nicht erkannter, überraschender Vorteile und Gestaltungsmöglichkeiten erzielt.

So können die Außenhaut und der Kern reproduzierbar in exakt gleichmäßiger Formgenauigkeit hergestellt werden, die Außenhaut aus kratzfesten Materialien in hervorragender Oberflächenqualität ohne Einfallstellen. Durch den Kern aus Recyclingmaterial können die Materialkosten erheblich verringert werden. Es sind z.B. mit einer Herstellung des Kerns aus buntem Granulat unter einer klarsichtigen Oberflächenaußenhaut eine Vielzahl von Gestaltungen mit unterschiedlichen Farbeffekten möglich.

In vorteilhafter Ausbildung der Erfindung wird der Kern aus mittels Treibgas geschäumtem Kunststoff (TSG) gespritzt. Er ist so besonders leicht und preisgünstig.

Insbesondere bei Herstellung von WC-Sitzen und -Deckeln wird die Unterfläche in vorteilhafter Weise aus elastischem, farblich unempfindlichem Material angespritzt. Die Stoßstellen der beiden Außenhaut-Materialien der Ober- und der Unterfläche sind wie beim Farben-Spritzgießen kaum fühlbar.

Die Reihenfolge der Verfahrensschritte ist beliebig und unabhängig von der Artikel- und Werkzeugausführung bzw. der Ausführung der Spritzgießmaschine. So können z.B. Maschinen mit Drehtisch, 3-Etagen oder auch Umsetzwerkzeugen eingesetzt werden.

Die Zykluszeit des Verfahrens gemäß der Erfindung kann vorteilhaft durch gleichzeitiges Spritzen der drei Lagen im 3-Takt-Spritzen noch reduziert werden.

Die Zeichnung zeigt ein Ausführungsbeispiel der Erfindung, und zwar die Herstellung eines im Querschnitt dargestellten WC-Sitzes. Hierbei zeigen:

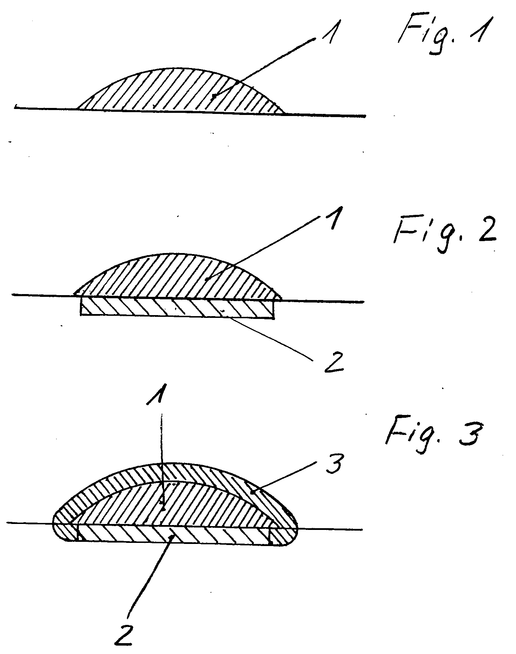

- Fig. 1: den im Verfahrensschritt a gespritzten Kern (1) aus Recycling-Material,
- Fig. 2: die im Schritt b an den Kern (1) angespritzte Unterfläche (2),
- Fig. 3: die im Schritt c auf den Kern (1) aufgespritzte und mit der Unterfläche (2) mittels Stoß verbundene Oberfläche (3).

## Patentansprüche

1. Verfahren zum Herstellen dickwandiger Kunststoffartikel, insbesondere von WC-Sitzen und -Deckeln, **gekennzeichnet** durch die Verwendung des Mehrkomponenten-Spritzgießens, bei dem zwei oder mehrere Lagen an- bzw. aufgespritzt werden, mit folgenden, in beliebiger Reihenfolge durchführbaren, Verfahrensschritten:
a) Spritzen eines Kerns (1),
b) Anspritzen einer Unterfläche (2),
c) Aufspritzen einer Oberfläche (3),
wobei alle Schritte in reproduzierbarer Formgenauigkeit durchgeführt werden.

2. Verfahren nach Anspruch 1, **dadurch gekennzeichnet**, daß der Kern (1) aus Recycling-Material mit Treibgas gespritzt wird.

3. Verfahren nach Anspruch 1, **dadurch gekennzeichnet**, daß die angespritzte Unterfläche (2) aus elastischem Material besteht.

4. Verfahren nach Anspruch 1, **dadurch gekennzeichnet**, daß die Oberfläche (3) aus klarsichtigem Material besteht.

5. Verfahren nach Anspruch 1, **dadurch gekennzeichnet**, daß die Verfahrensschritte a, b und c in verschiedenen Kavitäten bzw. Teilkavitäten erfolgen.
